# FASCICULE DE BREVET EUROPEEN

(11) **EP 3 705 404 B1**
(45) Date de publication et mention de la délivrance du brevet: **22.12.2021**
(21) Numéro de dépôt: 20157992.7
(22) Date de dépôt: 18.02.2020
(51) Int. Cl.: B64D 27/18, B64D 27/26

(54) **DISPOSITIF DE LIAISON RELIANT UN MOTEUR D'AÉRONEF ET UNE STRUCTURE PRIMAIRE D'UN MÂT D'AÉRONEF COMPRENANT UN PALONNIER ET UN SYSTÈME DE LIMITATION DU DÉBATTEMENT HORS PLAN DU PALONNIER, AÉRONEF COMPRENANT UN TEL DISPOSITIF DE LIAISON**
VERBINDUNGSVORRICHTUNG ZWISCHEN EINEM LUFTFAHRZEUGMOTOR UND EINER PRIMÄRSTRUKTUR EINES LUFTFAHRZEUGMASTS, DIE EIN SEITENSTEUERPEDAL UND EIN SYSTEM FÜR DIE BEGRENZUNG DES RUDERAUSSCHLAGS AUSSERHALB DER EBENE UMFASST, UND EINE SOLCHE VERBINDUNGSVORRICHTUNG UMFASSENDES LUFTFAHRZEUG
LINKING DEVICE CONNECTING AN ENGINE OF AN AIRCRAFT AND A PRIMARY STRUCTURE OF AN AIRCRAFT MAST COMPRISING A RUDDER AND A SYSTEM FOR LIMITING THE OUT-OF-PLANE DISPLACEMENT OF THE RUDDER, AIRCRAFT COMPRISING SUCH A LINKING DEVICE

(30) Priorité: 05.03.2019 FR 1902219
(43) Date de publication de la demande: 09.09.2020
(73) Titulaire: Airbus Operations SAS, 31060 Toulouse (FR)
(72) Inventeur: DEFORET, Thomas, 31300 TOULOUSE (FR); LANSIAUX, Rémi, 31000 TOULOUSE (FR); DUBOIS, Olivier, 31780 CASTELGINEST (FR); MERTES, Anthony, 81000 ALBI (FR); ALRIC, David, 31470 SAINT-LYS (FR); NOGUES, Stéphane, 32220 LOMBEZ (FR)
(74) Mandataire: Fantin, Laurent

(56) Documents cités:
- US-A- 5 320 307
- US-A1- 2001 025 902
- US-A1- 2011 259 997
- US-A1- 2018 281 980

## Description

La présente demande se rapporte à un dispositif de liaison reliant un moteur d'aéronef et une structure primaire d'un mât d'aéronef comprenant un palonnier et un système de limitation du débattement hors plan du palonnier ainsi qu'à un aéronef comprenant un tel dispositif de liaison. US 5,320,307 divulgue un dispositif de liaison reliant un moteur d'aéronef et une structure primaire d'un mât d'aéronef qui fait partie de l'état de la technique.

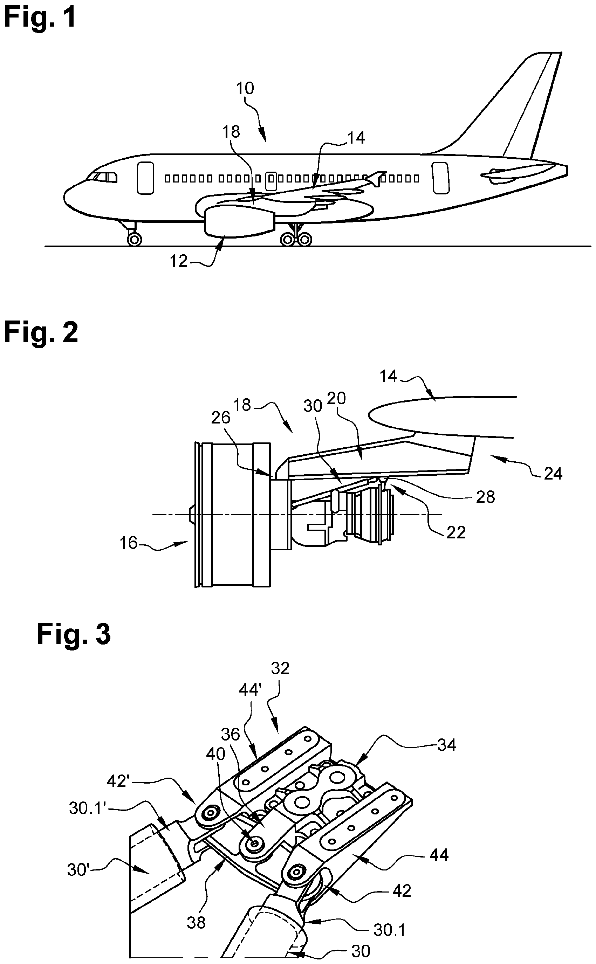

Selon un mode de réalisation visible sur les figures 1 et 2, un aéronef 10 comprend plusieurs ensembles propulseurs 12 positionnés sous chacune des ailes 14 de l'aéronef. Chaque ensemble propulseur 12 comprend un moteur 16, une nacelle (non représentée sur la figure 2) positionnée autour du moteur 16 et un mât 18 reliant le moteur 16 et l'aile 14. Le mât 18 comprend une structure primaire 20 qui est reliée au moteur 16 par une attache-moteur 22 et à l'aile 14 par une attache-voilure 24.

L'attache-moteur 22 comprend une attache moteur avant 26, une attache moteur arrière 28 et un couple de bielles de poussée 30, 30' assurant la reprise des efforts de poussée.

Selon un mode de réalisation visible sur la figure 3, chaque bielle de poussée 30, 30' comprend une extrémité arrière 30.1, 30.1' reliée à la structure primaire 20 par un dispositif de liaison 32 et une extrémité avant reliée au moteur 16.

Le dispositif de liaison 32 comprend :
- un support 34, configuré pour être solidaire de la structure primaire 20, présentant une chape principale 36,
- un palonnier 38 relié à la chape principale 36 par une liaison principale 40 présentant un axe de rotation principal positionné dans un plan vertical.

Chaque extrémité arrière 30.1, 30.1' des bielles de poussée 30, 30' est reliée à l'une des extrémités du palonnier 38 par une liaison secondaire 42, 42' présentant un axe de rotation secondaire positionné dans un plan vertical.

Les bielles de poussées 30, 30', les liaisons secondaires 42, 42', le palonnier 38, la liaison principale 40 et le support 34 définissent deux chemins primaires de poussée entre le moteur 16 et la structure primaire 20.

Le dispositif de liaison 32 comprend également deux ferrures 44, 44', une pour chaque bielle de poussée 30, 30', solidaires du support 34, disposées de part et d'autre de la chape principale 36 et reliées aux bielles de poussée 30, 30' par les liaisons pivotantes secondaires 42, 42'. Les ferrures 44, 44' définissent deux chemins secondaires de poussée qui compensent une éventuelle défaillance d'un des chemins primaires de poussée.

Cette configuration conduit à un couplage important entre les modes propres des chemins primaires de poussée et les fréquences moteur. Dans certaines circonstances, ce couplage peut mener à la rupture d'un des chemins primaires de poussée.

La présente invention vise à remédier à tout ou partie des inconvénients de l'art antérieur. A cet effet, l'invention a pour objet un dispositif de liaison reliant un moteur d'aéronef et une structure primaire d'un mât d'aéronef, comprenant :
- un support configuré pour être relié à la structure primaire,
- un palonnier s'étendant entre des première et deuxième extrémités, qui présente une partie centrale reliée au support par une liaison principale comprenant un axe de rotation principal,
- une première bielle de poussée comportant une première extrémité reliée à la première extrémité du palonnier par une première liaison secondaire et une deuxième extrémité configurée pour être reliée au moteur,
- une deuxième bielle de poussée comportant une première extrémité reliée à la deuxième extrémité du palonnier par une deuxième liaison secondaire et une deuxième extrémité configurée pour être reliée au moteur,
- des première et deuxième ferrures, solidaires du support, comportant des branches supérieure et inférieure entre lesquelles est positionné le palonnier,
- le dispositif de liaison générant un débattement du palonnier qui peut pivoter autour d'un axe de rotation de débattement perpendiculaire à l'axe de rotation principal et contenu dans un plan de symétrie passant par l'axe de rotation principal.

Selon l'invention, le dispositif de liaison comprend au moins un système de limitation du débattement du palonnier comportant un prolongement solidaire du palonnier ainsi que des butées supérieure et inférieure, solidaires de la première ou deuxième ferrure, entre lesquelles est positionné le prolongement.

Chaque système de limitation du débattement permet d'augmenter la rigidité hors plan du palonnier et d'obtenir un découplage de certains modes propres des chemins primaires de poussée et des fréquences moteur.

Selon une autre caractéristique, le système de limitation du débattement du palonnier est configuré de sorte qu'une somme des distances entre la butée supérieure et le prolongement ainsi qu'entre la butée inférieure et le prolongement soit inférieure ou égale à 0,3 mm.

Selon une autre caractéristique, le dispositif de liaison comprend des premier et deuxième systèmes de limitation du débattement du palonnier solidaires respectivement des première et deuxième ferrures.

Selon une autre caractéristique, chaque butée supérieure ou inférieure comprend une face de contact contre laquelle le prolongement peut venir en appui, au moins l'une des faces de contact comprenant un revêtement d'amortissement.

Selon un premier mode de réalisation, pour chaque système de limitation du débattement, les butées supérieure et inférieure sont disjointes de la ferrure et chaque dispositif de limitation du débattement comprend une platine, fixée à la ferrure, à laquelle sont reliées les butées supérieure et inférieure.

Selon ce premier mode de réalisation, la butée supérieure comprend une première aile plaquée contre une face extérieure de la branche supérieure de la ferrure et la butée inférieure comprend une deuxième aile configurée pour être plaquée contre une face extérieure de la branche inférieure de la ferrure.

Selon un deuxième mode de réalisation, pour chaque système de limitation du débattement, les butées supérieure et inférieure sont disjointes de la ferrure et indépendantes l'une de l'autre, la butée supérieure étant reliée à la branche supérieure de la ferrure, la butée inférieure étant reliée à la branche inférieure de la ferrure.

Selon ce deuxième mode de réalisation, chaque butée supérieure ou inférieure comprend :
- un corps qui présente une première face formant une face de contact contre laquelle le prolongement peut venir en appui et une deuxième face, parallèle à la première face, plaquée contre une face intérieure de la branche supérieure ou inférieure de la ferrure, et
- une aile réalisée d'un seul tenant avec le corps, plaquée contre une face latérale de la branche supérieure ou inférieure de la ferrure.

Selon ce deuxième mode de réalisation, l'aile comprend un ergot coopérant avec une encoche prévue au niveau de la face latérale de la branche supérieure ou inférieure de la ferrure.

Selon un troisième mode de réalisation, pour chaque système de limitation du débattement, la butée supérieure est intégrée à la branche supérieure de la ferrure et la butée inférieure est intégrée à la branche inférieure de la ferrure.

Selon ce troisième mode de réalisation, la branche supérieure comprend une aile supérieure, en saillie par rapport à une face intérieure de la branche supérieure, qui présente une face intérieure contre laquelle le prolongement peut venir en appui et la branche inférieure comprend une aile inférieure, en saillie par rapport à une face intérieure de la branche inférieure, qui présente une face intérieure contre laquelle le prolongement peut venir en appui.

L'invention a également pour objet un aéronef comprenant un dispositif de liaison selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une représentation schématique latérale d'un ensemble propulsif (la nacelle n'étant pas représentée),
- La figure 3 est une vue en perspective d'un dispositif de liaison reliant des bielles de poussée et une structure primaire d'un mât d'aéronef qui illustre un mode de réalisation de l'art antérieur,
- La figure 4 est une vue en perspective d'un dispositif de liaison reliant des bielles de poussée et une structure primaire d'un mât d'aéronef qui illustre un premier mode de réalisation de l'invention,
- La figure 5 est une vue perspective d'un dispositif de liaison reliant une bielle de poussée et une ferrure qui illustre en détails le premier mode de réalisation de l'invention,
- La figure 6 est une vue en perspective d'une ferrure et d'un palonnier qui illustre le premier mode de réalisation de l'invention,
- La figure 7 est une vue en perspective d'un dispositif de liaison reliant des bielles de poussée et une structure primaire d'un mât d'aéronef qui illustre un deuxième mode de réalisation de l'invention,
- La figure 8 est une vue latérale d'un dispositif de liaison reliant une bielle de poussée et une structure primaire d'un mât d'aéronef qui illustre le deuxième mode de réalisation,
- La figure 9 est une vue en perspective d'un dispositif de liaison reliant des bielles de poussée et une structure primaire d'un mât d'aéronef, à l'état démonté, qui illustre le deuxième mode de réalisation de l'invention,
- La figure 10 est une vue en perspective d'une butée et d'une ferrure à l'état démonté qui illustre le deuxième mode de réalisation,
- La figure 11 est une vue latérale de la butée visible sur la figure 10,
- La figure 12 est une vue en perspective d'un dispositif de liaison reliant des bielles de poussée et une structure primaire d'un mât d'aéronef qui illustre un troisième mode de réalisation de l'invention, et
- La figure 13 est une vue en perspective d'une ferrure et d'un palonnier qui illustre en détails le troisième mode de réalisation.

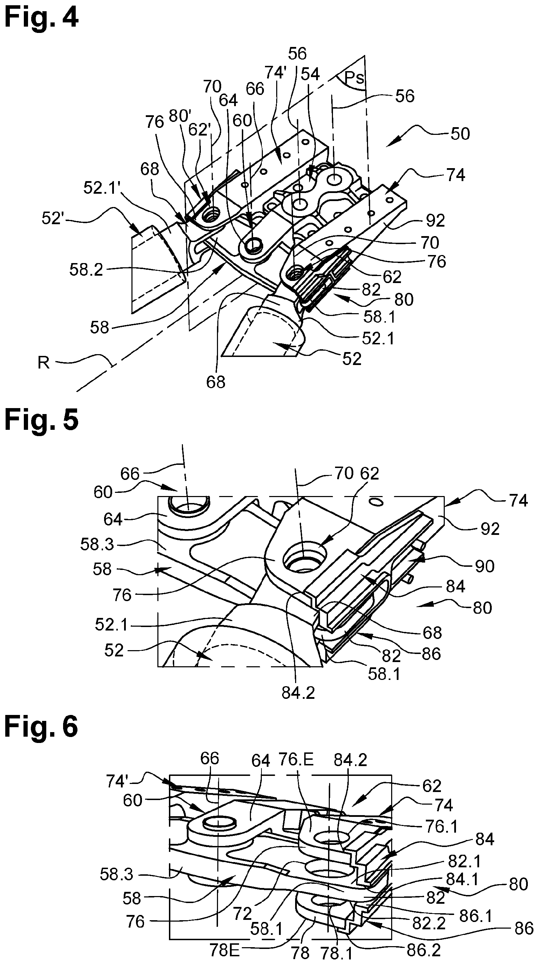

Sur les figures 4, 7 et 12, on a représenté un dispositif de liaison 50 reliant un moteur et une structure primaire d'un mât d'aéronef (non représenté).

Ce dispositif de liaison 50 comprend :
- un support 54 (également appelé poutre) configuré pour être relié à la structure primaire par des éléments de liaison 56 (représentés schématiquement par des traits d'axe),
- un palonnier 58, qui s'étend entre des première et deuxième extrémités 58.1, 58.2, présentant une partie centrale 58.3 reliée au support 54 par une liaison principale 60,
- une première bielle de poussée 52 qui présente une première extrémité 52.1 reliée à la première extrémité 58.1 du palonnier 58 par une première liaison secondaire 62 et une deuxième extrémité configurée pour être reliée au moteur, et
- une deuxième bielle de poussée 52' qui présente une première extrémité 52.1' reliée à la deuxième extrémité 58.2 du palonnier 58 par une deuxième liaison secondaire 62' et une deuxième extrémité configurée pour être reliée au moteur.

La liaison principale 60 comprend une chape principale 64 reliée au support 54 et un axe de rotation principal 66 (représenté schématiquement par un trait d'axe) supporté par la chape principale 64 et traversant un orifice principal traversant le palonnier 58.

Le palonnier 58 se présente sous la forme d'une plaque positionnée dans un plan perpendiculaire à l'axe de rotation principal 66.

Chacune des première et deuxième liaisons secondaires 62, 62' comprend une chape secondaire 68, prévue au niveau de chacune des extrémités arrières 52.1, 52.1' des bielles 52, 52', et un axe de rotation secondaire 70 (représenté schématiquement par un trait d'axe) supporté par la chape secondaire 68 et logé dans un orifice 72 traversant le palonnier 58, prévu à chacune des première et deuxième extrémités 58.1, 58.2 du palonnier 58.

Le dispositif de liaison 50 présente un plan de symétrie Ps passant par l'axe de rotation principal 66.

Les première et deuxième bielles 52, 52', les liaisons secondaires 62, 62', le palonnier 58, la liaison principale 60 et le support 54 définissent deux chemins primaires de poussée.

Le dispositif de liaison 50 comprend également des première et deuxième ferrures 74, 74', solidaires du support 54, disposées de part et d'autre de la chape principale 64 de manière symétrique par rapport au plan de symétrie Ps. Chacune des première et deuxième ferrures 74, 74' comprend une branche supérieure 76 et une branche inférieure 78 entre lesquelles est positionné le palonnier 58. Les première et deuxième extrémités 58.1, 58.2 sont disposées de part et d'autre de la chape secondaire 68 prévue à chacune des extrémités arrières 52.1, 52.1' des bielles 52, 52', chacune des branches supérieure et inférieure 76, 78 comprenant un trou oblong 76.1, 78.1 (visible notamment sur la figure 6) configuré pour loger les extrémités des axes de rotation secondaires 70.

En cas de défaillance d'une des première ou deuxième bielles de poussée 52, 52', la ferrure 74, 74' située dans le prolongement de la bielle défaillante limite les mouvements de rotation autour de l'axe de rotation principal 66 générés par la bielle restante. Ainsi, les ferrures 74, 74' définissent des chemins secondaires de poussée.

Les première et deuxième bielles de poussée 52, 52', le support 54, le palonnier 58, la liaison principale 60, les première et deuxième liaisons secondaires 62, 62' ne sont pas plus décrits car ils peuvent être identiques à ceux de l'art antérieur.

Quel que soit le mode de réalisation, le dispositif de liaison 50 génère un débattement du palonnier 58 qui peut pivoter autour d'un axe de rotation de débattement R contenu dans le plan de symétrie Ps et perpendiculaire à l'axe de rotation principal 66.

Selon une caractéristique de l'invention, le dispositif de liaison 50 comprend au moins un système de limitation 80 du débattement du palonnier 58. Selon une configuration, le dispositif de liaison 50 comprend des premier et deuxième systèmes de limitation 80, 80' respectivement pour les première et deuxième extrémités 58.1, 58.2 du palonnier 58.

Pour chacune des première et deuxième extrémités 58.1, 58.2 du palonnier 58, le système de limitation 80 comprend un prolongement 82 solidaire de l'extrémité 58.1, 58.2 du palonnier 58, en saillie par rapport à la chape secondaire 68 logeant l'extrémité 58.1, 58.2 du palonnier 58, ainsi que des butées supérieure et inférieure 84, 86, solidaires de la première ou deuxième ferrure 74, 74', entre lesquelles est positionné le prolongement 82.

Selon une configuration, la somme des distances entre la butée supérieure 84 et le prolongement 82 ainsi qu'entre la butée inférieure 86 et le prolongement 82 est sensiblement inférieure ou égale à 0,3 mm.

Chaque prolongement 82 comprend une face supérieure 82.1 orientée vers la butée supérieure 84 et une face inférieure 82.2 orientée vers la butée inférieure 86. Les faces supérieure et inférieure 82.1, 82.2 sont parallèles et planes.

Chaque butée supérieure ou inférieure 84, 86 comprend une face de contact 84.1, 86.1, sensiblement plane, contre laquelle le prolongement 82 peut venir en appui. Les faces de contact 84.1, 86.1 des butées supérieure et inférieure 84, 86 sont parallèles entre elles.

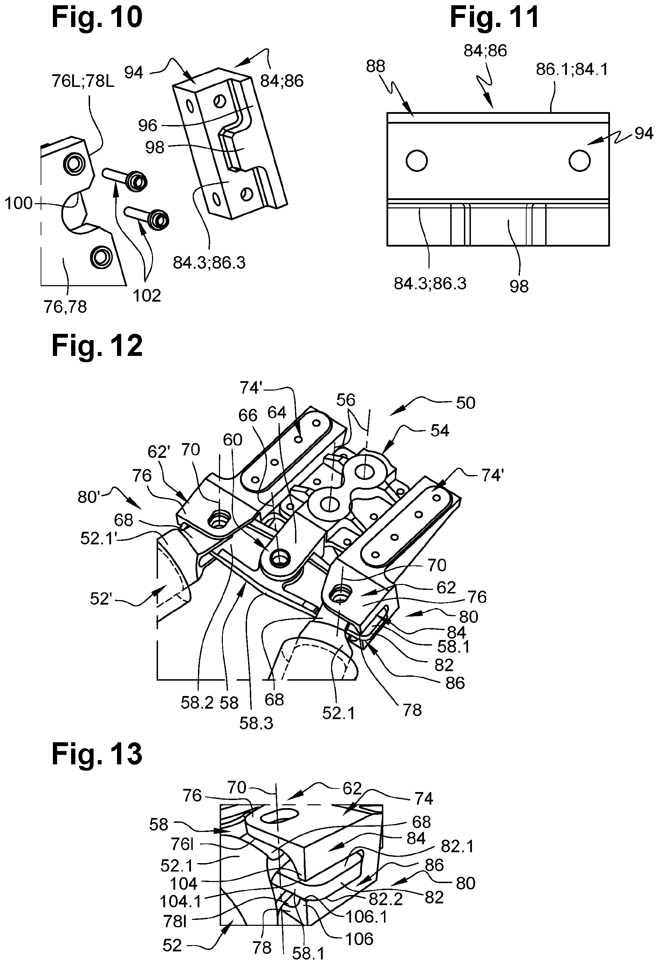

Selon un mode de réalisation visible sur la figure 11, au moins l'une des faces de contact 84.1, 86.1 comprend un revêtement d'amortissement 88 configuré pour amortir le contact entre l'une des butées supérieure et inférieure 84, 86 et le prolongement 82. A titre d'exemple, le revêtement d'amortissement 88 comprend des éléments cylindriques sous forme d'éponges métalliques.

Selon un premier mode de réalisation visible sur les figures 4 à 6, pour chaque système de limitation 80 du débattement, les butées supérieure et inférieure 84, 86 sont disjointes de la ferrure 74, 74'. Chaque dispositif de limitation 80 du débattement comprend une platine 90, plaquée et fixée contre une face latérale 92 de la ferrure 74, 74', à laquelle sont reliées les butées supérieure et inférieure 84, 86. Les butées supérieure et inférieure 84, 86 ainsi que la platine 90 forment une pièce d'un seul tenant en Y, les butées supérieure et inférieure 84, 86 formant les branches de la forme en Y et la platine 90 formant le pied de la forme en Y.

La butée supérieure 84 comprend une première aile 84.2 configurée pour être plaquée contre la face extérieure 76E de la branche supérieure 76 de la ferrure 74, 74' et la butée inférieure 86 comprend une deuxième aile 86.2 configurée pour être plaquée contre la face extérieure 78E de la branche inférieure 78 de la ferrure 74, 74', comme illustré sur la figure 6.

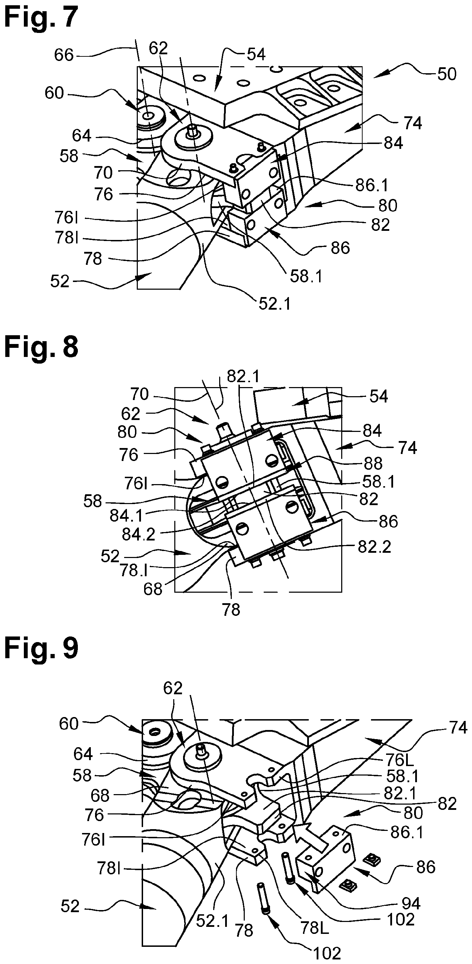

Selon un deuxième mode de réalisation visible sur les figures 7 à 11, pour chaque système de limitation 80 du débattement, les butées supérieure et inférieure 84, 86 sont disjointes de la ferrure 74, 74' et indépendantes l'une de l'autre. Selon ce deuxième mode de réalisation, pour chaque ferrure 74, 74', la butée supérieure 84 est reliée à la branche supérieure 76 de la ferrure 74, 74' et la butée inférieure 86 est reliée à la branche inférieure 78 de la ferrure 74, 74'.

Selon un mode de réalisation visible sur les figures 9 à 11, chaque butée supérieure ou inférieure 84, 86 comprend un corps 94 parallélépipédique qui présente une première face correspondant à la face de contact 84.1, 86.1 et une deuxième face 84.3, 86.3, parallèle à la première face, configurée pour être plaquée contre la face intérieure 76l ou 78l de la branche supérieure ou inférieure 76, 78. Chaque butée supérieure ou inférieure 84, 86 comprend une aile 96, réalisée d'un seul tenant avec le corps 94, configurée pour être plaquée contre la face latérale 76L, 78L de la branche supérieure ou inférieure 76, 78.

Selon le deuxième mode de réalisation, comme illustré sur les figures 10 et 11, l'aile 96 comprend un ergot 98 configuré pour coopérer avec une encoche 100 prévue au niveau de la face latérale 76L, 78L de la branche supérieure ou inférieure 76, 78 de manière à immobiliser en translation l'ergot 98 par rapport à l'encoche 100.

Selon ce deuxième mode de réalisation, chaque butée supérieure ou inférieure 84, 86 est reliée à la branche supérieure ou inférieure 76, 78 par deux éléments de liaison 102, comme par exemple une vis et un écrou barillet.

Selon un troisième mode de réalisation visible sur les figures 12 et 13, pour chaque système de limitation 80 du débattement, la butée supérieure 84 est intégrée à la branche supérieure 76 de la ferrure 74, 74' et la butée inférieure 86 est intégrée à la branche inférieure 78 de la ferrure 74, 74'. Selon ce troisième mode de réalisation, la branche supérieure 76 comprend une aile supérieure 104 en saillie par rapport à la face intérieure 76l de la branche supérieure 76, l'aile supérieure 104 comprenant une face intérieure 104.1 qui correspond à la face de contact 84.1 de la butée supérieure 84. La branche inférieure 78 comprend une aile inférieure 106 en saillie par rapport à la face intérieure 78l de la branche inférieure 78, l'aile inférieure 106 comprenant une face intérieure 106.1 qui correspond à la face de contact 86.1 de la butée inférieure 86.

Les systèmes de limitation 80 permettent d'augmenter la rigidité hors plan du palonnier 58 et d'obtenir un découplage de certains modes propres des chemins primaires de poussée et des fréquences moteur.

## Revendications

1. Dispositif de liaison configuré pour relier un moteur d'aéronef et une structure primaire d'un mât d'aéronef, comprenant :
- un support (54) configuré pour être relié à la structure primaire,
- un palonnier (58), s'étendant entre des première et deuxième extrémités (58.1, 58.2), qui présente une partie centrale (58.3) reliée au support (54) par une liaison principale (60) comprenant un axe de rotation principal (66),
- une première bielle de poussée (52) comportant une première extrémité (52.1) reliée à la première extrémité (58.1) du palonnier (58) par une première liaison secondaire (62) et une deuxième extrémité configurée pour être reliée au moteur,
- une deuxième bielle de poussée (52') comportant une première extrémité (52.1') reliée à la deuxième extrémité (58.2) du palonnier (58) par une deuxième liaison secondaire (62') et une deuxième extrémité configurée pour être reliée au moteur,
- des première et deuxième ferrures (74, 74'), solidaires du support (54), comportant des branches supérieure et inférieure (76, 78) entre lesquelles est positionné le palonnier (58),
- **caractérisé en ce que** le dispositif de liaison (50) génère un débattement du palonnier (58) qui peut pivoter autour d'un axe de rotation de débattement (R) perpendiculaire à l'axe de rotation principal (66) et contenu dans un plan de symétrie (Ps) passant par l'axe de rotation principal (66);
en outre, le dispositif de liaison (50) comprend au moins un système de limitation (80) du débattement du palonnier (58) comportant un prolongement (82) solidaire du palonnier (58) ainsi que des butées supérieure et inférieure (84, 86), solidaires de la première ou deuxième ferrure (74, 74'), entre lesquelles est positionné le prolongement (82).

2. Dispositif de liaison selon la revendication 1, **caractérisé en ce que** le système de limitation (80) du débattement du palonnier (58) est configuré de sorte qu'une somme des distances entre la butée supérieure (84) et le prolongement (82) ainsi qu'entre la butée inférieure (86) et le prolongement (82) soit inférieure ou égale à 0,3 mm.

3. Dispositif de liaison selon la revendication 1 ou 2, **caractérisé en ce que** le dispositif de liaison (50) comprend des premier et deuxième systèmes de limitation (80, 80') du débattement du palonnier (58) solidaires respectivement des première et deuxième ferrures (74, 74').

4. Dispositif de liaison selon l'une des revendications précédentes, **caractérisé en ce que** chaque butée supérieure ou inférieure (84, 86) comprend une face de contact (84.1, 86.1) contre laquelle le prolongement (82) peut venir en appui, au moins l'une des faces de contact (84.1, 86.1) comprenant un revêtement d'amortissement (88).

5. Dispositif de liaison selon l'une des revendications précédentes, **caractérisé en ce que**, pour chaque système de limitation (80) du débattement, les butées supérieure et inférieure (84, 86) sont disjointes de la ferrure (74, 74') et **en ce que** chaque dispositif de limitation (80) du débattement comprend une platine (90), fixée à la ferrure (74, 74'), à laquelle sont reliées les butées supérieure et inférieure (84, 86).

6. Dispositif de liaison selon la revendication précédente, **caractérisé en ce que** la butée supérieure (84) comprend une première aile (84.2) configurée pour être plaquée contre une face extérieure (76E) de la branche supérieure (76) de la ferrure (74, 74') et **en ce que** la butée inférieure (86) comprend une deuxième aile (86.2) configurée pour être plaquée contre une face extérieure (78E) de la branche inférieure (78) de la ferrure (74, 74').

7. Dispositif de liaison selon l'une des revendications 1 à 4, **caractérisé en ce que**, pour chaque système de limitation (80) du débattement, les butées supérieure et inférieure (84, 86) sont disjointes de la ferrure (74, 74') et indépendantes l'une de l'autre, la butée supérieure (84) étant reliée à la branche supérieure (76) de la ferrure (74, 74') et la butée inférieure (86) étant reliée à la branche inférieure (78) de la ferrure (74, 74').

8. Dispositif de liaison selon la revendication précédente, **caractérisé en ce que** chaque butée supérieure ou inférieure (84, 86) comprend :
- un corps (94) qui présente une première face formant une face de contact (84.1, 86.1) contre laquelle le prolongement (82) peut venir en appui et une deuxième face (84.3, 86.3), parallèle à la première face, plaquée contre une face intérieure (76l, 78l) de la branche supérieure ou inférieure (76, 78) de la ferrure (74, 74'), et
- une aile (96) réalisée d'un seul tenant avec le corps (94), plaquée contre une face latérale (76L, 78L) de la branche supérieure ou inférieure (76, 78) de la ferrure (74, 74').

9. Dispositif de liaison selon la revendication précédente, **caractérisé en ce que** l'aile (96) comprend un ergot (98) coopérant avec une encoche (100) prévue au niveau de la face latérale (76L, 78L) de la branche supérieure ou inférieure (76, 78) de la ferrure (74, 74').

10. Dispositif de liaison selon l'une des revendications 1 à 4, **caractérisé en ce que**, pour chaque système de limitation (80) du débattement, la butée supérieure (84) est intégrée à la branche supérieure (76) de la ferrure (74, 74') et la butée inférieure (86) est intégrée à la branche inférieure (78) de la ferrure (74, 74').

11. Dispositif de liaison selon la revendication précédente, **caractérisé en ce que** la branche supérieure (76) comprend une aile supérieure (104), en saillie par rapport à une face intérieure (76l) de la branche supérieure (76), qui présente une face intérieure (104.1) contre laquelle le prolongement (82) peut venir en appui et **en ce que** la branche inférieure (78) comprend une aile inférieure (106), en saillie par rapport à une face intérieure (78l) de la branche inférieure (78), qui présente une face intérieure (106.1) contre laquelle le prolongement (82) peut venir en appui.

12. Aéronef comprenant un dispositif de liaison selon l'une des revendications précédentes.

## Patentansprüche

1. Verbindungsvorrichtung, die dazu eingerichtet ist, ein Triebwerk eines Luftfahrzeugs und eine Primärstruktur eines Triebwerkträgers eines Luftfahrzeugs zu verbinden, mit:
- einem Träger (54), der dazu eingerichtet ist, mit der Primärstruktur verbunden zu werden,
- einer Traverse (58), die sich zwischen einem ersten und einem zweiten Ende (58.1, 58.2) erstreckt, die ein Mittelteil (58.3) aufweist, das mit dem Träger (54) durch eine Hauptverbindung (60) verbunden ist, und die eine Hauptdrehachse (66) aufweist,
- einer ersten Schubstange (52), die ein erstes Ende (52.1) aufweist, das mit dem ersten Ende (58.1) der Traverse (58) durch eine erste sekundäre Verbindung (62) verbunden ist, und ein zweites Ende aufweist, das dazu eingerichtet ist, mit dem Triebwerk verbunden zu sein,
- eine zweite Schubstange (52'), die ein erstes Ende (52.1') aufweist, das mit dem zweiten Ende (58.2) der Traverse (58) durch eine zweite sekundäre Verbindung (62') verbunden ist, und ein zweites Ende aufweist, das dazu eingerichtet ist, mit dem Triebwerk verbunden zu sein,
- erste und zweite Anschlussstücke (74, 74'), die mit dem Träger (54) fest verbunden sind und die obere und untere Schenkel (76, 78) aufweisen, zwischen denen die Traverse (58) angeordnet ist,
- **dadurch gekennzeichnet, dass** die Verbindungsvorrichtung (50) einen Ausschlag der Traverse (58) zulässt, die um eine zur Hauptdrehachse (66) senkrechte und in einer Symmetrieebene (Ps) gelegene Drehachse (R) schwenken kann, die durch die Hauptdrehachse (66) hindurchgeht; und dass
die Verbindungsvorrichtung (50) zusätzlich wenigstens ein Begrenzungssystem (80) für den Ausschlag der Traverse (58) aufweist, das eine mit der Traverse (58) fest verbundene Verlängerung (82) sowie obere und untere Anschläge (84, 86) aufweist, die mit dem ersten oder zweiten Anschlussstück (74, 74'), zwischen denen die Verlängerung (82) angeordnet ist, fest verbunden sind.

2. Verbindungsvorrichtung nach Anspruch 1, **dadurch gekennzeichnet, dass** das Begrenzungssystem (80) für den Ausschlag der Traverse (58) so ausgebildet ist, dass die Summe der Abstände zwischen dem oberen Anschlag (84) und der Verlängerung (82) sowie zwischen dem unteren Anschlag (86) und der Verlängerung (82) kleiner gleich 0,3 mm ist.

3. Verbindungsvorrichtung nach Anspruch 1 oder 2, **dadurch gekennzeichnet, dass** die Verbindungsvorrichtung (50) ein erstes und zweites Begrenzungssysteme (80, 80') für den Ausschlag der Traverse (58) aufweist, die jeweils an dem ersten und zweiten Anschlussstück befestigt sind (74, 74').

4. Verbindungsvorrichtung nach einem der vorhergehenden Ansprüche, **dadurch gekennzeichnet, dass** der obere oder untere Anschlag (84, 86) jeweils eine Kontaktfläche (84.1, 86.1) aufweist, an der die Verlängerung (82) anliegen kann, wobei wenigstens einer der Kontaktflächen (84.1, 86.1) eine dämpfende Beschichtung (88) aufweist.

5. Verbindungsvorrichtung nach einem der vorhergehenden Ansprüche, **dadurch gekennzeichnet, dass** bei jedem Begrenzungssystem (80) für die Ausschläge die oberen und unteren Anschläge (84, 86) vom Anschlussstück (74, 74') getrennt sind und dass jede Begrenzungsvorrichtung (80) für den Ausschlag eine am Anschlussstück (74, 74') befestigte Platte (90) aufweist, mit der die oberen und unteren Anschläge (84, 86) verbunden sind.

6. Verbindungsvorrichtung nach dem vorhergehenden Anspruch, **dadurch gekennzeichnet, dass** der obere Anschlag (84) einen ersten Flügel (84.2) aufweist, der dazu eingerichtet ist, gegen eine Außenfläche (76E) des oberen Schenkels (76) des Anschlussstücks (74, 74') angesetzt zu sein, und dass der untere Anschlag (86) einen zweiten Flügel (86.2) aufweist, der dazu eingerichtet ist, gegen eine Außenfläche (78E) des unteren Schenkels (78) des Anschlussstücks (74, 74') angesetzt zu sein.

7. Verbindungsvorrichtung nach einem der Ansprüche 1 bis 4, **dadurch gekennzeichnet, dass** bei jedem Begrenzungssystem (80) für den Ausschlag der obere und untere Anschlag (84, 86) vom Anschlussstück (74, 74') getrennt und voneinander unabhängig sind, wobei der obere Anschlag (84) mit dem oberen Schenkel (76) des Anschlussstücks (74, 74') verbunden ist und der untere Anschlag (86) mit dem unteren Schenkel (78) des Anschlussstücks (74, 74') verbunden ist.

8. Verbindungsvorrichtung nach dem vorhergehenden Anspruch, **dadurch gekennzeichnet, dass** jeder obere oder untere Anschlag (84, 86) versehen ist mit:
- einem Körper (94), der eine erste Fläche aufweist, die eine Kontaktfläche (84.1, 86.1) bildet, an der die Verlängerung (82) anliegen kann, und eine zweite Fläche (84.3, 86.3) aufweist, die parallel zur ersten Fläche ist und die gegen eine Innenfläche (76I, 78I) des oberen oder unteren Schenkels (76, 78) des Anschlussstücks (74, 74') angesetzt ist, und
- einem mit dem Körper (94) einstückig ausgebildeten Flügel (96), der gegen eine Seitenfläche (76L, 78L) des oberen oder unteren Schenkels (76, 78) des Anschlussstücks (74, 74') angesetzt ist.

9. Verbindungsvorrichtung nach dem vorhergehenden Anspruch, **dadurch gekennzeichnet, dass** der Flügel (96) einen Vorsprung (98) aufweist, die mit einem Einzug (100) zusammenwirkt, der an der Seitenfläche (76L, 78L) des oberen oder unteren Schenkels (76, 78) des Anschlussstückes (74, 74') vorgesehen ist.

10. Verbindungsvorrichtung nach einem der Ansprüche 1 bis 4, **dadurch gekennzeichnet, dass** bei jedem Begrenzungssystem (80) für den Ausschlag der obere Anschlag (84) in den oberen Schenkel (76) des Anschlussstücks (74, 74') integriert ist und der untere Anschlag (86) in den unteren Schenkel (78) des Anschlussstücks (74, 74') integriert ist.

11. Verbindungsvorrichtung nach dem vorhergehenden Anspruch, **dadurch gekennzeichnet, dass** der obere Schenkel (76) einen von einer Innenseite (76I) des oberen Schenkels (76) abstehenden oberen Flügel (104) umfasst, der eine Innenseite (104.1) aufweist, an dem die Verlängerung (82) anliegen kann, und dass der untere Schenkel (78) einen von einer Innenseite (78I) des unteren Schenkels (78) abstehenden unteren Flügel (106) aufweist, der eine Innenseite (106.1) aufweist, an der die Verlängerung (82) anliegen kann.

12. Luftfahrzeug mit einer Verbindungsvorrichtung nach einem der vorhergehenden Ansprüche.

## Claims

1. Linking device configured to connect an aircraft engine and a primary structure of an aircraft pylon, comprising:
- a support (54) configured to be connected to the primary structure,
- a spreader (58), extending between first and second ends (58.1, 58.2), that has a central part (58.3) connected to the support (54) by a principal link (60) comprising a principal rotation axis (66),
- a first thrust rod (52) comprising a first end (52.1) connected to the first end (58.1) of the spreader (58) by a first secondary link (62) and a second end configured to be connected to the engine,
- a second thrust rod (52') comprising a first end (52.1') connected to the second end (58.2) of the spreader (58) by a second secondary link (62') and a second end configured to be connected to the engine,
- first and second fittings (74, 74') , secured to the support (54), comprising upper and lower branches (76, 78), between which the spreader (58) is positioned,
**characterized in that** the linking device (50) generates a deflection of the spreader (58) that is configured to pivot about a deflection rotation axis (R) perpendicular to the principal rotation axis(66) and contained in a plane of symmetry (Ps) passing via the principal rotation axis (66) and **in that** the linking device (50) comprises at least one system (80) for limiting the deflection of the spreader (58) comprising an extension (82) secured to the spreader (58) and also upper and lower stops (84, 86), secured to the first or second fitting (74, 74'), between which the extension (82) is positioned.

2. Linking device according to claim 1, wherein the at least one system (80) for limiting the deflection of the spreader (58) is configured such that a sum of distances between the upper stop (84) and the extension (82) and between the lower stop (86) and the extension (82) is less than or equal to 0.3 mm.

3. Linking device according to claim 1 or 2, wherein the linking device (50) comprises first and second systems (80, 80') for limiting the deflection of the spreader (58) which are secured, respectively, to the first and second fittings (74, 74').

4. Linking device according to one of the preceding claims, wherein each upper or lower stop (84, 86) comprises a contact face (84.1, 86.1) against which the extension (82) is configured to bear, at least one of the contact faces (84.1, 86.1) comprising a shock-absorbing covering (88).

5. Linking device according to one of the preceding claims, wherein, for each system (80) for limiting the deflection, the upper and lower stops (84, 86) are out-of-joint with the fitting (74, 74'), and wherein each system (80) for limiting the deflection comprises a plate (90), fixed to the fitting (74, 74'), to which the upper and lower stops (84, 86) are connected.

6. Linking device according to the preceding claim, wherein the upper stop (84) comprises a first flange (84.2) configured to be placed against an exterior face (76E) of the upper branch (76) of the fitting (74, 74') and wherein the lower stop (86) comprises a second flange (86.2) configured to be placed against an exterior face (78E) of the lower branch (78) of the fitting (74, 74').

7. Linking device according to one of the claims 1 to 4, wherein, for each system (80) for limiting the deflection, the upper and lower stops (84, 86) are out-of-joint with the fitting (74, 74') and independent of one another, the upper stop (84) being connected to the upper branch (76) of the fitting (74, 74') and the lower stop (86) being connected to the lower branch (78) of the fitting (74, 74').

8. Linking device according to the preceding claim, wherein each upper or lower stop (84, 86) comprises:
- a body (94) that has a first face forming a contact face (84.1, 86.1) against which the extension (82) is able to bear and a second face (84.3, 86.3), parallel to the first face, placed against an interior face (761, 781) of the upper or lower branch (76, 78) of the fitting (74, 74'), and
- a flange (96) made as a single piece with the body (94), placed against a lateral face (76L, 78L) of the upper or lower branch (76, 78) of the fitting (74, 74').

9. Linking device according to the preceding claim, wherein the flange (96) comprises a stud (98) interacting with a notch (100) provided at the lateral face (76L, 78L) of the upper or lower branch (76, 78) of the fitting (74, 74').

10. Linking device according to one of the claims 1 to 4, wherein, for each system (80) for limiting the deflection, the upper stop (84) is integrated into the upper branch (76) of the fitting (74, 74') and the lower stop (86) is integrated into the lower branch (78) of the fitting (74, 74').

11. Linking device according to the preceding claim, wherein the upper branch (76) comprises an upper flange (104), projecting from an interior face (761) of the upper branch (76), which has an interior face (104.1) against which the extension (82) is able to bear and wherein the lower branch (78) comprises a lower flange (106), projecting from an interior face (781) of the lower branch (78), which has an interior face (106.1) against which the extension (82) is able to bear.

12. Aircraft comprising a linking device according to one of the preceding claims.
